# EUROPÄISCHE PATENTSCHRIFT

(11) **EP 2 201 236 B1**
(45) Veröffentlichungstag und Bekanntmachung des Hinweises auf die Patenterteilung: **12.09.2012**
(21) Anmeldenummer: 08786345.2
(22) Anmeldetag: 23.07.2008
(51) Int. Cl.: F02D 41/14, F02D 41/40

(54) **VERFAHREN ZUM BEURTEILEN EINER FUNKTIONSWEISE EINES EINSPRITZVENTILS BEI ANLEGEN EINER ANSTEUERSPANNUNG UND ENTSPRECHENDE AUSWERTEVORRICHTUNG**
METHOD FOR ASSESSING A MODE OF OPERATION OF AN INJECTION VALVE IN THE EVENT OF AN ACTIVATION VOLTAGE BEING APPLIED, AND CORRESPONDING EVALUATION DEVICE
PROCÉDÉ D'ÉVALUATION D'UN MODE DE FONCTIONNEMENT D'UNE SOUPAPE D'INJECTION LORS DE L'APPLICATION D'UNE TENSION DE COMMANDE, ET DISPOSITIF D'ÉVALUATION CORRESPONDANT

(30) Priorität: 10.09.2007 DE 102007042994
(43) Veröffentlichungstag der Anmeldung: 30.06.2010
(73) Patentinhaber: Robert Bosch GmbH, 70442 Stuttgart (DE)
(72) Erfinder: HUBER, Andreas, 71711 Steinheim (DE); BREITBACH, Thomas, 70499 Stuttgart (DE); PECK, Rainer, 71636 Ludwigsburg (DE); KRIECHBAUM, Christian, 70374 Stuttgart (DE)
(86) Internationale Anmeldenummer: PCT/EP2008/059653
(87) Internationale Veröffentlichungsnummer: WO 2009/033869

(56) Entgegenhaltungen:
- EP-A- 1 146 216
- GB-A- 2 423 833

## Beschreibung

Die Erfindung betrifft ein Verfahren zum Beurteilen einer Funktionsweise eines Einspritzventils bei Anlegen einer Ansteuerspannung. Des Weiteren betrifft die Erfindung eine Auswertevorrichtung zum Beurteilen einer Funktionsweise eines Einspritzventils bei Anlegen einer Ansteuerspannung.

Die DE 102006013166 beschreibt ein Verfahren und ein Steuergerät zum Bestimmen einer Öffnungsspannung eines Injektors mit einem Piezoaktor. Dabei wird das Öffnen des Injektors ermittelt, indem die Bestromung bei einer Haltespannung unterbrochen und anschließend eine an dem Piezoaktor anliegende Spannungsänderung gemessen und mit einem Vergleichs-Spannungsanstieg verglichen wird.

Ferner beschreibt die EP 1146 216 A ein Verfahren zur Regelung der Abgastemperatur. Hierzu wird ausgehend von dem Luft-Kraftstoff-Verhältnis und der Drehzahl ein Motorbetriebsparameter-Zielwert berechnet. Ausgehend von diesem Motorbetriebsparameter-Zielwert wird ein Stellungsleitwert für ein Steller, insbesondere eine Drosselklappe berechnet.

Häufig weist ein Einspritzventil, beispielsweise ein Common-Rail-Injektor (CRI), mindestens einen Aktor auf. Der mindestens eine Aktor kann zum Beispiel ein Piezoaktor sein. Zum Einspritzen eines Kraftstoffs in einen Verbrennungsmotor wird in diesem Fall eine Ansteuerspannung an den mindestens einen Aktor angelegt. Der mindestens eine Aktor erfährt dann aufgrund der angelegten Ansteuerspannung eine Ausdehnung und übt gleichzeitig einen Druck auf eine an dem mindestens einen Aktor angeordnete Schaltkette, welche beispielsweise einen hydraulischen Koppler aufweist, aus. Ein hinter der Schaltkette angeordneter Schaitventil, möglicherweise ein hydraulisches Servoventil, wird auf diese Weise in eine Öffnungsstellung bewegt. Befindet sich das Schaltventil in seiner Öffnungsstellung, so kann der Kraftstoff aus dem Kraftstofftank in den Verbrennungsmotor einfließen.

Zur genauen Dosierung des in den Verbrennungsmotor eingespritzten Kraftstoffs sollte die Ansteuerspannung so gewählt werden, dass das Schaltventil mit einem definierten Kraftüberschuss in seine Öffnungsstellung verschoben wird. Dabei ist zu berücksichtigen, dass die Ansteuerspannung zum Verschieben des Schaltventils in seine Öffnungsstellung abhängig von einem Raildruck ist.

Häufig wird die Ansteuerspannung bei der Injektorfertigung individuell für jedes Einspritzventil ermittelt. Eine Kennlinie der zum Öffnen des Einspritzventils ermittelten Ansteuerspannung abhängig vom jeweiligen Raildruck wird anschließend in einem Einspritzsteuergerät zum Steuern des Einspritzventils hinterlegt. Man spricht dabei auch von einem injektorindividuellen Spannungsabgleich (ISA).

Allerdings unterliegen sowohl der mindestens eine Aktor als auch die Schaltkette während ihrer Lebensdauer einer Drift. Damit ergibt sich auch eine Abweichung bei der zum Öffnen des Einspritzventils erforderlichen Ansteuerspannung von der ursprünglichen Kennlinie während des Betriebs des Einspritzventils in einem Fahrzeug.

Es ist deshalb vorteilhaft, wenn während des Betriebs des Einspritzventils die Kennlinie der zum Öffnen des Einspritzventils notwendigen Ansteuerspannung überprüft wird. Insbesondere sollte diese Überprüfung unter Berücksichtigung des jeweiligen Raildrucks erfolgen. Allerdings sind nach dem bisherigen Stand der Technik noch keine Möglichkeiten bekannt, um diese Überprüfung ohne eine Komforteinbuße für den Fahrer, beispielsweise aufgrund einer Geräuschbildung, oder eine nennenswerte Beeinflussung des Fahrverhaltens des Fahrzeugs auszuführen.

Die Erfindung schafft ein Verfahren mit den Merkmalen des Anspruchs 1 und eine Auswertevorrichtung mit den Merkmalen des Anspruchs 10.

Das erfindungsgemäße Verfahren beruht dabei auf der Erkenntnis, dass die Anzahl und die Lautstärke der während eines Beurteilens der Funktionsweise des Einspritzventils bei einem Anlegen einer Ansteuerspannung erzeugten Geräusche deutlich reduziert werden, wenn die jeweilige Ansteuerspannung für eine nicht-drehmomentbildende Einspritzung an den mindestens einen Aktor des Einspritzventils angelegt wird. Man bezeichnet eine derartige nicht-drehmomentbildende Einspritzung häufig auch als Nacheinspritzung.

Hingegen kommt es bei dem erfindungsgemäßen Verfahren kaum zu einer Geräuschbildung bei einer erfolgten nicht-drehmomentbildenden Einspritzung. Ebenso wird das Fahrverhalten des Fahrzeugs bei einem Ausführen des erfindungsgemäßen Verfahrens während einer Fahrt kaum beeinflusst. Das erfindungsgemäße Verfahren lässt sich damit regelmäßig während einer Fahrt durchführen, ohne dass dies für den Fahrer mit einer Komforteinbuße verbunden ist.

Des Weiteren beruht das erfindungsgemäße Verfahren auf der Erkenntnis, dass eine erfolgte nicht-drehmomentbildende Einspritzung mit einer herkömmlicherweise am Fahrzeug schon verbauten Sensoreinrichtung zum Ermitteln eines Kraftstoffgehalts im Abgastrakt nachweisbar ist. Zur Durchführung des Verfahrens ist es deshalb nicht notwendig, eine weitere Sensoreinrichtung im Verbrennungsmotor oder im Abgastrakt anzubringen. Dies spart die Kosten und den Bauraum für eine weitere Sensoreinrichtung. Der gemessene Kraftstoffgehalt kann dabei ein Kraftstoff/Luft-Verhältnis oder eine Kraftstoffmenge im Abgastrakt sein. Die nicht-drehmomentbildende Einspritzung kann somit auch nach einem Zünden des Kraftstoffs im Motor nachgewiesen werden.

Vorzugsweise wird festgestellt, dass das Anlegen der Ansteuerspannung an den mindestens einen Aktor kein Öffnen des Einspritzventils bewirkt, sofern der ermittelte Kraftstoffgehalt kleiner als der Vergleichswert ist, und, dass das Anlegen der Ansteuerspannung an den mindestens einen Aktor ein Öffnen des Einspritzventils bewirkt, sofern der ermittelte Kraftstoffgehalt größer als der Vergleichswert ist. Auf diese Weise lässt sich leicht feststellen, ob eine Drift des mindestens einen Aktors oder der Schaltkette am Einspritzventil vorliegt.

In einer bevorzugten Ausführungsform des Verfahrens wird der Kraftstoffgehalt in dem Abgastrakt mittels einer Lambdasonde ermittelt. Herkömmlicherweise sind nahezu alle Fahrzeuge mit einem Gewicht von mehr als 1.500 kg mit einer Lambdasonde ausgestattet, welche gewährleisten soll, dass die vorgegebenen Emissionsgrenzwerte eingehalten werden Eine derartige Lambdasonde erlaubt ein verlässliches Nachweisen einer erfolgten nicht-drehmomentbildenden Einspritzung.

Vorzugsweise wird das Anlegen der Ansteuerspannung an den mindestens einen Aktor bei einer Kolbenstellung ausgeführt, bei welcher bei einem Verbrennen eines möglicherweise in den Motor eingespritzten Kraftstoffs kein Drehmoment freigesetzt wird. Auf diese Weise kann eine Geräuschbildung beim Ausführen des Verfahrens nahezu vollständig verhindert werden.

In einer bevorzugten Ausführungsform wird das Anlegen der Ansteuerspannung an den mindestens einen Aktor bei einer Kolbenstellung ausgeführt, bei welcher der möglicherweise in den Motor eingespritzte Kraftstoff nicht mehr gezündet wird. Damit wird verhindert, dass die Durchführung des Verfahrens Verbrennungsgeräusche oder Wärme verursacht. Diese Ausführungsform des Verfahrens eignet sich deshalb besonders gut für ein Durchführen während einer Fahrt.

Zusätzlich kann ein Raildruck gemessen und die Funktionsweise des Einspritzventils abhängig von dem Raildruck ausgewertet werden. Das Verfahren berücksichtigt damit auch die Relation zwischen der zum Öffnen des Einspritzventils notwendigen Ansteuerspannung und dem aktuell vorliegenden Raildruck.

In einer Weiterbildung des Verfahrens wird zu Beginn des Verfahrens ein Ausgangswert für die Ansteuerspannung vorgegeben. Ein derartiger Ausgangswert kann beispielsweise die vom Hersteller für das neu hergestellte Einspritzventil vorgegebene Ansteuerspannung bei dem aktuellen Raildruck sein.

In einer bevorzugten Weiterbildung wird, sofern der ermittelte Kraftstoffgehalt kleiner als der Vergleichswert ist, die Ansteuerspannung um eine erste vorgegebene Spannungsdifferenz erhöht und das Verfahren mindestens noch einmal wiederholt, um eine Ansteuerspannung als neu bestimmte Ansteuerspannung zu ermitteln, deren Anlegen an den mindestens einen Aktor ein Öffnen des Einspritzventils bewirkt. Das Verfahren lässt sich somit nicht nur dazu verwenden, festzustellen, ob eine Drift an dem mindestens einen Aktor oder an der Schaltkette des Einspritzventils vorliegt. Zusätzlich kann, sobald eine derartige Situation festgestellt wird, eine zum Öffnen des Einspritzventils geeignete Ansteuerspannung neu bestimmt werden.

Ebenso kann, sofern der ermittelte Kraftstoffgehalt größer als der Vergleichswert ist, die Ansteuerspannung um eine zweite vorgegebene Spannungsdifferenz reduziert werden, das Verfahren mindestens noch einmal wiederholt werden und anschließend die kleinste Ansteuerspannung als neu bestimmte Ansteuerspannung ermittelt werden, bei deren Anlegen an den mindestens einen Aktor ein Öffnen des Einspritzventils ermittelt wird. Die zweite Spannungsdifferenz kann dabei deutlich niedriger gewählt werden als die erste Spannungsdifferenz. Damit lässt sich die kleinste Ansteuerspannung, welche ein Öffnen des Einspritzventils bewirkt, relativ genau ermitteln. Durch die vorliegende Erfindung ist es damit möglich, nach einem längeren Betrieb eines Einspritzventils die an den Aktor anzulegende Ansteuerspannung für eine sichere Einspritzung mit einem minimalen Toleranzbereich während des normalen Fahrbetriebs neu zu bestimmen. Die an den jeweiligen Aktor anzulegende Ansteuerspannung kann dabei abhängig vom Raildruck neu bestimmt werden. Die ermittelten Korrekturwerte können anschließend in einem Korrektorkennfeld individuell abgespeichert werden.

In einer Weiterbildung des Verfahrens wird anhand der neu bestimmten Ansteuerspannung eine Kennlinie für eine optimal Ansteuerspannung in Abhängigkeit von dem Raildruck bestimmt. Dabei wird bei der Applikation des Einspritzventils eine Anzahl von leeren Punkten festgelegt, die eine hinreichend eindeutige Identifizierung des Aktors ermöglichen. Zur Überprüfung der verbauten Aktoren werden bei Vorliegen der entsprechenden Freigaben, welche beispielsweise ein Raildruck, eine Abgastemperatur oder weitere Stationaritäten sind, nacheinander die leeren Punkten mit ihren Ansteuerspannungsvariationen vermessen. Sind alle leeren Punkte des Aktors vermessen, so wird der auf diese Weise erstellte Fingerabdruck mit den für diesen Aktor ursprünglich gespeicherten minimalen Spannungsbedarfwerten verglichen und im Kennfeld abgelegt. Diese Kennfeldwerte stehen anschließend für eine Korrektur der Ladespannungsansteuerung der einzelnen Aktoren zur Verfügung.

Die oben genannten Vorteile des erfindungsgemäßen Verfahrens gelten auch für eine entsprechende Auswertevorrichtung. Auch mithilfe dieser Auswertevorrichtung kann eine Driftkorrektur der an einem Einspritzventil verbauten Aktoren ausgeführt werden, was eine einwandfreie Funktion der Aktoren während des gesamten Betriebs gewährleistet.

Weitere Anwendungsmöglichkeiten und Vorteile der Erfindung ergeben sich aus den nachfolgenden Beschreibungen von Ausführungsbeispielen, welche in den Zeichnungen dargestellt sind. Es zeigen:
- Figur 1:: ein Flussdiagramm einer ersten Ausführungsform des Verfahrens zum Beurteilen einer Funktionsweise eines Einspritzventils bei Anlegen einer Ansteuerspannung;
- Figur 2:: ein Flussdiagramm einer zweiten Ausführungsform des Verfahrens; und
- Figur 3:: einen schematischen Aufbau zum Darstellen einer Funktion der Auswertevorrichtung zum Beurteilen einer Funktionsweise eines Einspritzventils bei Anlegen einer Ansteuerspannung.

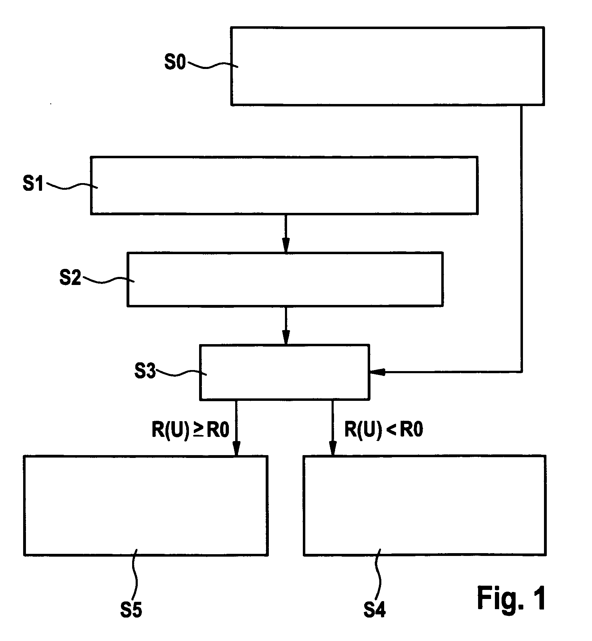

Figur 1 zeigt ein Flussdiagramm einer ersten Ausführungsform des Verfahrens zum Beurteilen einer Funktionsweise eines Einspritzventils bei Anlegen einer Ansteuerspannung.

Vor einem eigentlichen Beginn des Verfahrens wird ein Vergleichswert R0 für einen Kraftstoffgehalt in einem Abgastrakt vorgegeben (Schritt SO). Der Vergleichswert R0 ist beispielsweise eine Kraftstoffmenge oder ein Kraftstoff/Luft-Verhältnis. Dabei entspricht der Vergleichswert R0 einem Kraftstoffgehalt in dem Abgastrakt nach einer erfolgten nicht-drehmomentbildenden Einspritzung von Kraftstoff in den zugehörigen Verbrennungsmotor.

Vorzugsweise wird der Schritt S0 vor einer Inbetriebnahme des Einspritzventils vom Hersteller ausgeführt. Das Einspitzventil wird anschließend in ein Fahrzeug eingebaut.

In einem Schritt S1 wird, beispielsweise während einer Fahrt des Fahrzeugs, eine Ansteuerspannung U für eine nicht-drehmomentbildende Einspritzung an den mindestens einen Aktor des Einspritzventils angelegt. In einer bevorzugten Ausführungsform ist der mindestens eine Aktor ein Piezoaktor. Das Anlegen der Ansteuerspannung U erfolgt beispielsweise bei einer Kolbenstellung, bei welcher bei einem Verbrennen eines möglicherweise in den Motor eingespritzten Kraftstoffs kein Drehmoment freigesetzt wird. Vorteilhafterweise kann die Kolbenstellung so gewählt werden, dass ein möglicherweise in den Motor eingespritzter Kraftstoff nicht mehr gezündet wird.

Die Ansteuerspannung U ist beispielsweise die von dem Hersteller des Einspritzventils vorgegebene Ansteuerspannung bei dem aktuell vorliegenden Raildruck p. Zusätzlich kann die Ansteuerspannung U auch hinsichtlich einer aktuellen Abgastemperatur gewählt werden.

In einem weiteren Schritt S2 wird nach dem Anlegen der Ansteuerspannung U an den mindestens einen Aktor ein Kraftstoffgehalt R(U) im Abgastrakt ermittelt. Der Kraftstoffgehalt R(U) kann beispielsweise eine Kraftstoffmenge oder ein Luft/ Kraftstoff -Verhältnis im Abgastrakt sein.

Anschließend wird der Kraftstoffgehalt R(U) mit dem Vergleichswert R0 in Schritt S3 verglichen. Auf diese Weise soll festgestellt werden, ob bei einem Anlegen der Ansteuerspannung U an den mindestens einen Aktor das Einspritzventil geöffnet und ein Kraftstoff in den Verbrennungsmotor eingespritzt wird.

Ist der gemessene Kraftstoffgehalt R(U) kleiner als der Vergleichswert R0, so wird in Schritt S4 festgestellt, dass das Anlegen der Ansteuerspannung U an den mindestens einen Aktor kein Öffnen des Einspritzventils bewirkt. Erfolgt bei einem Anlegen der Ansteuerspannung U kein Öffnen des Einspritzventils, so deutet dies auf eine wahrscheinliche Drift des mindestens einem Aktors oder der Schaltkette hin. In diesem Falle ist es notwendig, die zum Öffnen des Einspritzventils erforderliche Ansteuerspannung U neu zu bestimmen, damit während des weiteren Betriebs des Einspritzventils die gewünschten Einspritzmengen verlässlich eingehalten werden. Eine entsprechende Nachricht wird daraufhin ausgegeben.

Liegt der gemessene Kraftstoffgehalt R(U) über dem Vergleichswert R0, so bewirkt das Anlegen der Ansteuerspannung U an den Aktor ein Öffnen des Einspritzventils und damit ein Einspritzen von Kraftstoff in den Verbrennungsmotor. Dies wird in Schritt S5 festgestellt. Auch in diesem Fall wird eine entsprechende Nachricht ausgegeben.

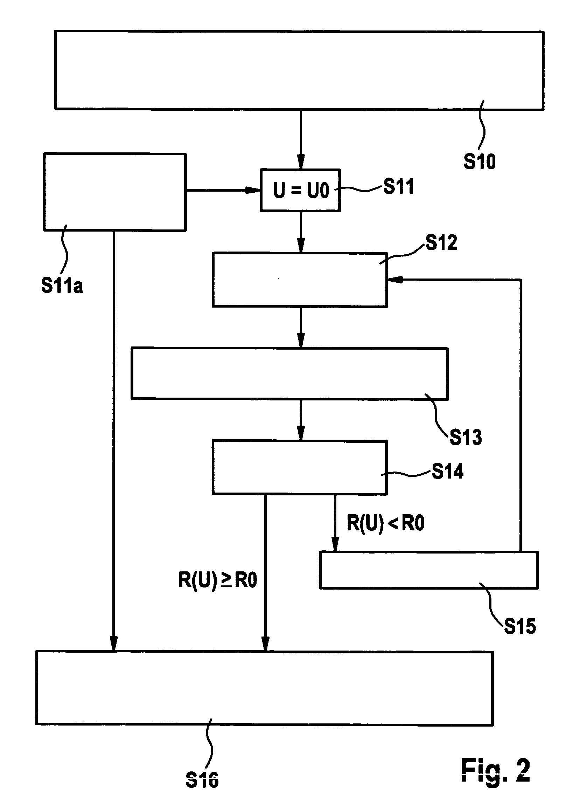

Figur 2 zeigt ein Flussdiagramm einer zweiten Ausführungsform des Verfahrens zum Beurteilen einer Funktionsweise eines Einspritzventils bei Anlegen einer Ansteuerspannung.

In einem dem Verfahren vorausgehenden Schritt S10 werden eine Ausgangs-Ansteuerspannung U0, eine Spannungsdifferenz ΔU und der schon beschriebene Vergleichswert R0 für einen Kraftstoffgehalt im Abgastrakt vorgegeben. In einer bevorzugten Ausführungsform wird dieser Schritt S10 vom Hersteller des Einspritzventils vor dessen Inbetriebnahme ausgeführt.

Die Ausgangs-Ansteuerspannung U0 ist beispielsweise eine zum Öffnen des neuen Einspritzventils geeignete Ansteuerspannung, welche von dem Hersteller speziell für dieses Einspritzventil ermittelt wird. Auf die Spannungsdifferenz ΔU wird weiter unten noch genauer eingegangen.

Während einer Fahrt des Fahrzeugs wird das Verfahren in einen Schritt Slla gestartet, um den mindestens einen Aktor und die Schaltkette des Einspritzventils hinsichtlich einer möglichen Drift zu untersuchen. Dabei wird ein aktueller Raildruck p gemessen. Abhängig von dem aktuellen Raildruck p wird eine Ansteuerspannung U aus den bereitgestellten Ausgangs-Ansteuerspannungen U0 ausgewählt (Schritt S11).

In einem weiteren Schritt S12 wird die Ansteuerspannung U für eine nicht-drehmomentbildende Einspritzung an den mindestens einen Aktor des Einspritzventils angelegt. Besonders vorteilhaft ist es, wenn die Ansteuerspannung U erst dann an den mindestens einen Aktor des Einspritzventils angelegt wird, wenn sich die Kolben in einer Stellung befinden, bei welcher ein möglicherweise in den Motor eingespritzter Kraftstoff nicht mehr gezündet wird. Ein möglicherweise erfolgendes Einspritzen von Kraftstoff in den Motor beeinflusst damit kaum die Funktionsweise des Motors. Mögliche Geräuschänderungen, wie beispielsweise Motorgeräusche oder Verbrennungsgeräusche, werden bei der als Nacheinspritzung ausgelösten Einspritzung vermieden. Ebenso wird keine Drehmomentänderung hervorgerufen, weshalb das Verfahren auch während des normalen Fahrbetriebs anwendbar ist.

In einem anschließenden Schritt S13 wird ein Kraftstoffgehalt R(U), beispielsweise eine Kraftstoffmenge oder ein Kraftstoff/Luft -Verhältnis, im Abgastrakt ermittelt. In einer bevorzugten Ausführungsform wird der Kraftstoffgehalt R(U) ermittelt, indem das Kraftstoff/LuftVerhältnis im Abgastrakt mittels der Lambdasonde gemessen und anschließend mit dem Messwert eines innerhalb der Luftzuführung angebrachten Luftmengenmessers ausgewertet wird. Da der Luftmengenmesser und die Lambdasonde herkömmlicherweise bereits in vielen Fahrzeugen verbaut sind, lässt sich diese Ausführungsform des Schritts S13 durchführen, ohne dass ein zusätzlicher Sensor am Fahrzeug eingebaut werden muss.

In einem weiteren Schritt S14 wird der ermittelte Kraftstoffgehalt R(U) mit dem Vergleichswert R0 verglichen. Ist der Kraftstoffgehalt R(U) kleiner als der Vergleichswert R0, so wird festgestellt, dass bei einem Anlegen der Ansteuerspannung U an den mindestens einen Aktor kein Öffnen des Einspritzventils erfolgt. Dies deutet auf eine Drift des mindestens eines Aktors oder der Schaltkette des Einspritzventils. Es ist deshalb vorteilhaft, wenn die Ansteuerspannung U zum Öffnen des Einspritzventils in dieser Situation neu bestimmt wird.

In einem nachfolgenden Verfahrensschritt S15 wird die Ansteuerspannung U um die Spannungsdifferenz ΔU erhöht. Anschließend werden die Verfahrensschritte S12 bis S14 für die neu festgelegte Ansteuerspannung U erneut durchgeführt. Liegt auch diesmal der ermittelte Kraftstoffgehalt R(U) unter dem Vergleichswert R0, so werden die Verfahrensschritte S15 und S12 bis S14 wiederholt. Dies geschieht so lange, bis ein Kraftstoffgehalt R(U) ermittelt wird, welcher über dem Vergleichswert R0 liegt.

Bei einem Kraftstoffgehalt R(U) über dem Vergleichswert R0 wird festgestellt, dass bei Anlegen der Ansteuerspannung U an den mindestens einen Aktor ein Öffnen des Einspritzventils erfolgt (in Figur 2 jedoch nicht eingezeichnet). In einem weiteren Verfahrensschritt S16 wird dann die kleinste Ansteuerspannung U, bei welcher ein Kraftstoffgehalt R(U) größer als der Vergleichswert R0 ermittelt wird, als neu bestimmte Ansteuerspannung Un(p) festgelegt. Anhand dieser neu bestimmten Ansteuerspannung Un(p) kann anschließend ein Fingerabdruck für die jeweilige Drift des mindestens einen Aktors und/oder der Schaltkette festgestellt werden. Anschließend kann anhand dieses Fingerabdrucks eine neue Kennlinie für eine geeignete Ansteuerspannung U zum Öffnen des Schaltventils in Abhängigkeit des jeweiligen Raildrucks p festgelegt werden.

In einer Weiterbildung des Verfahrens kann nach dem Schritt S14, sofern der gemessene Kraftstoffgehalt größer als der Vergleichswert R0 ist, die Ansteuerspannung U um eine vorgegebene Minimal-Spannungsdifferenz reduziert werden. Die Minimal-Spannungsdifferenz ist dabei vorzugsweise deutlich kleiner als die Spannungsdifferenz ΔU. Die Schritte S12 bis S14 werden dann so lange durchgeführt, bis erneut ein Kraftstoffgehalt R(U) unter dem Vergleichswert R0 gemessen wird. Auf diese Weise lässt sich die kleinste Ansteuerspannung U ermitteln, bei welcher gerade noch ein Kraftstoffgehalt R(U) über dem Vergleichswert R0 ermittelt wird. Ein derartiger Iterationsschritt kann ausgeführt werden, um eine noch genauere Ansteuerspannung Un(p) festzulegen. Die dabei neu bestimmte Ansteuerspannung Un(p) kann anschließend, wie oben beschrieben, ausgewertet und/oder zum Betreiben des Einspritzventils verwendet werden. Es ist allerdings auch möglich, auf einen derartigen Iterationsschritt zum genaueren Bestimmen der neubestimmten Ansteuerspannung Un(p) zu verzichten, indem beispielsweite eine relativ kleine Spannungsdifferenz ΔU vorgegebene wird.

Als Alternative zu dem Kraftstoff/Luft-Verhältnis lässt sich der Kraftstoffgehalt auch als Luft/Kraftstoff-Verhältnis ermitteln. In diesem Fall kann ein Öffnen des Einspritzventils festgestellt werden, sofern das ermittelte Luft/Kraftstoff-Verhältnis kleiner als ein vorgegebener Vergleichswert ist. Ein nicht erfolgtes Öffnen des Einspritzventils trotz eines Anlegens einer Ansteuerspannung wird dann festgestellt, falls das ermittelte Luft/Kraftstoff-Verhältnis größer als ein vorgegebener Vergleichswert ist. In den Fig. 1 und 2 ist dies jedoch nicht dargestellt.

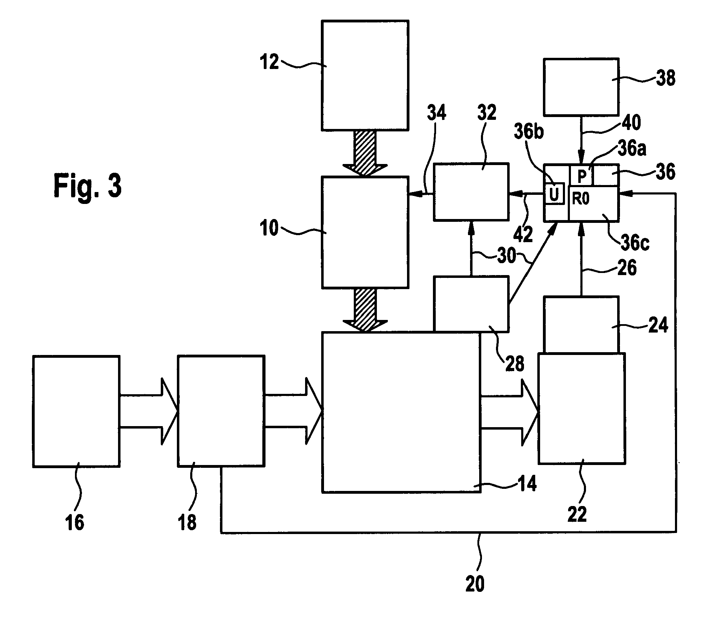

Figur 3 zeigt einen schematischen Aufbau zum Darstellen einer Funktion der Auswertevorrichtung zum Beurteilen einer Funktionsweise eines Einspritzventils bei Anlegen einer Ansteuerspannung an einen Aktor des Einspritzventils.

Das zu untersuchende Einspritzventil 10 ist zwischen einem Kraftstofftank 12 und einem Verbrennungsmotor 14 angeordnet. Ist das Einspritzventil 10 geöffnet, so wird ein Kraftstoff aus dem Kraftstofftank 12 in den Verbrennungsmotor 14 eingespritzt.

Der Verbrennungsmotor 14 ist auch an eine Luftzuführung 16 angeschlossen. Innerhalb der Luftzuführung 16 ist ein Luftmengenmesser 18 angeordnet, welcher die in den Verbrennungsmotor 14 eingefüllte Luftmenge misst und ein entsprechendes erstes Sensorsignal 20 bereitstellt.

Des Weiteren weist der Verbrennungsmotor 14 einen Ausgang zu einem Abgastrakt 22 auf. Innerhalb des Abgastrakts 22 ist ein Lambdasensor 24 angeordnet. Der Lambdasensor 24 ist dazu ausgelegt, ein Kraftstoff/Luft-Verhältnis im Abgastrakt 22 zu ermitteln und ein entsprechendes zweites Sensorsignal 26 bereitzustellen.

Zusätzlich ist am Verbrennungsmotor 14 eine Motorsensorik 28 angeordnet, mit welcher sich eine Kolbenstellung ermitteln lässt. Ein von der Motorsensorik 28 bereitgestelltes drittes Sensorsignal 30 enthält den Winkel nach dem oberen Todpunkt und wird an ein Einspritzsteuergerät 32 ausgegeben.

Das Einspritzsteuergerät 32 ist nach einem Empfang des dritten Sensorsignals 30 mit dem Winkel nach dem oberen Todpunkt von der Motorsensorik 28 dazu ausgelegt, das Einspritzventil 10 mittels eines an mindestens einen (nicht gezeigten) Aktor angelegten Spannungssignals 34 so zu steuern, dass das Einspritzventil 10 bei einem bestimmten Winkel nach dem oberen Todpunkt 30 geöffnet oder geschlossen wird.

Im Folgenden wird die Funktionsweise einer Auswertevorrichtung 36 zum Beurteilen einer Funktionsweise des Einspritzventils 10 bei Anlegen einer Ansteuerspannung U erläutert:
Die Auswertevorrichtung 36 empfängt über eine Empfangseinrichtung 36a ein viertes Sensorsignal 40 mit einem von einem fahrzeugeigenen Drucksensor 38 ermittelten Raildruck p. Eine Ausgabeeinrichtung 36b der Auswertevorrichtung 36 gibt anschließend eine dem Raildruck p entsprechende Ansteuerspannung U als Steuersignal 42 an das Einspritzsteuergerät 32 aus. Das Einspritzsteuergerät 32 wird durch das Steuersignal 42 so gesteuert, dass es ein der Ansteuerspannung U entsprechendes Spannungssignal 34 für eine nicht-drehmomentbildende Einspritzung an den Aktor des Einspritzventils 10 anlegt. Beispielsweise wartet das Einspritzsteuergerät 32 dazu auf einen Winkel nach dem oberen Todpunkt, bei welchem ein in den Verbrennungsmotor 14 eingespritzter Kraftstoff nicht mehr gezündet wird.

In einer alternativen Ausführungsform kann die Motorsensorik 28 das dritte Sensorsignal 30 mit den ermittelten Winkel nach dem oberen Todpunkt 30 auch an die Auswertevorrichtung 36 ausgeben. In diesem Fall gibt die Auswertevorrichtung 36 das Steuersignal 42 erst bei einem gewissen Winkel nach dem oberen Todpunkt an das Einspritzsteuergerät 32 aus.

Die Auswertevorrichtung 36 empfängt von dem Lambdasensor 24 das zweite Sensorsignal 26 mit dem gemessenen Kraftstoff/Luft-Verhältnis im Verbrennungstrakt 22. Zusätzlich erhält die Auswertevorrichtung 36 von dem Luftmengenmesser 18 das erste Sensorsignal 20 mit der in dem Verbrennungsmotor 14 eingefüllten Luftmenge. Eine Vergleichseinrichtung 36c der Auswertevorrichtung 36 ermittelt daraufhin anhand dieser Daten die in den Verbrennungsmotor 14 eingefüllte Kraftstoffmenge. Anschließend wird die berechnete Kraftstoffmenge mit einem Vergleichswert R0 verglichen. Liegt die in den Verbrennungsmotor 14 eingespritzte Kraftstoffmenge über dem Vergleichswert R0, so erkennt die Auswertevorrichtung 36, dass das Einspritzventil 10 bei einem Anlegen der jeweiligen Ansteuerspannung U an den mindestens einen Aktor geöffnet wird.

Ist die berechnete Kraftstoffmenge jedoch kleiner als der Vergleichswert R0, so erkennt die Auswertevorrichtung 36, dass das Anlegen der Ansteuerspannung U an den mindestens einen Aktor des Einspritzventils 10 kein Öffnen des Einspritzventils 10 bewirkt. Die jeweilige Ansteuerspannung U ist damit zum Öffnen des Einspritzventils 10 ungeeignet. Entspricht diese Ansteuerspannung U dem vom Hersteller für das neue Einspritzventil 10 vorgegebenen Wert, so liegt eine Drift des mindestens einem Aktors und/oder der Schaltkette vor.

Im Weiteren kann der minimal erforderliche Spannungsbedarf durch die Auswertevorrichtung 36, indem das beschriebene Messverfahren mit veränderten Ansteuerspannungen U wiederholt wird. Die auf diese Weise ermittelte minimal erforderliche Ansteuerspannung U für eine Einspritzung wird anschließend zylinderindividuell in Kennfeldern abgelegt und steht somit zur Driftkompensation der Aktoren zur Verfügung.

## Patentansprüche

1. Verfahren zum Beurteilen einer Funktionsweise eines Einspritzventils (10) bei Anlegen einer Ansteuerspannung (U) an mindestens einen Aktor des Einspritzventils (10) mit den Schritten:
(a) Anlegen der Ansteuerspannung (U) an den mindestens einen Aktor des Einspritzventils (10) für eine nicht-drehmomentbildende Einspritzung in einen Motor (14);
(b) Ermitteln eines Kraftstoffgehalts (R(U)) in einem an dem Motor (14) angeordneten Abgastrakt (22);
(c) Vergleichen des ermittelten Kraftstoffgehalts (R(U)) mit einem vorgegebenen Vergleichswert (R0); und
(d) Beurteilen der Funktionsweise des Einspritzventils (10) basierend auf dem Vergleichsergebnis,
(e) wobei festgestellt wird, dass das Anlegen der Ansteuerspannung (U) an den mindestens einen Aktor kein Öffnen des Einspritzventils (10) bewirkt, sofern der ermittelte Kraftstoffgehalt (R(U)) kleiner als der Vergleichswert (R0) ist,
(f) und dass festgestellt wird, dass das Anlegen der Ansteuerspannung (U) an den mindestens einen Aktor ein Öffnen des Einspritzventils (10) bewirkt, sofern der ermittelte Kraftstoffgehalt (R(U)) größer als der Vergleichswert (R0) ist.

2. Verfahren nach Anspruch 1, wobei der Kraftstoffgehalt (R(U)) in dem Abgastrakt (22) mittels einer Lambdasonde (24) ermittelt wird.

3. Verfahren nach einem der vorhergehenden Ansprüche, wobei Schritt (a) bei einer Kolbenstellung ausgeführt wird, bei welcher bei einem Verbrennen eines möglicherweise in den Motor (12) eingespritzten Kraftstoffs kein Drehmoment freigesetzt wird.

4. Verfahren nach Anspruch 1, wobei Schritt (a) bei einer Kolbenstellung ausgeführt wird, bei welcher der möglicherweise in den Motor (12) eingespritzte Kraftstoff nicht mehr gezündet wird.

5. Verfahren nach einem der vorhergehenden Ansprüche, wobei ein Raildruck (p) gemessen wird und die Funktionsweise des Einspritzventils (10) abhängig von dem Raildruck (p) ausgewertet wird.

6. Verfahren nach einem der vorhergehenden Ansprüche, wobei zu Beginn des Verfahrens ein Ausgangswert (U0) für die Ansteuerspannung (U) vorgegeben wird.

7. Verfahren nach Anspruch 5, wobei, sofern der ermittelte Kraftstoffgehalt (R(U)) kleiner als der Vergleichswert (R0) ist, die Ansteuerspannung (U) um eine erste vorgegebene Spannungsdifferenz (ΔU) erhöht wird und die Schritte (a) bis (c) mindestens noch einmal wiederholt werden, um eine Ansteuerspannung (U) als neu bestimmte Ansteuerspannung (Un(p)) zu ermitteln, deren Anlegen an den mindestens einen Aktor ein Öffnen des Einspritzventils (10) bewirkt.

8. Verfahren nach Anspruch 6 oder 6, wobei, sofern der ermittelte Kraftstoffgehalt (R(U)) größer als der Vergleichswert (R0) ist, die Ansteuerspannung (U) um eine zweite vorgegebene Spannungsdifferenz reduziert wird, die Schritte (a) bis (e) mindestens noch einmal wiederholt werden und anschließend die kleinste Ansteuerspannung (U) als neu bestimmte Ansteuerspannung (Un(p)) ermittelt wird, bei deren Anlegen an den mindestens einen Aktor ein Öffnen des Einspritzventils (10) ermittelt wird.

9. Verfahren nach Anspruch 6 oder 7, wobei anhand der neu bestimmten Ansteuerspannung (Un(p)) eine Kennlinie für eine optimale Ansteuerspannung in Abhängigkeit von dem Raildruck bestimmt wird.

10. Auswertevorrichtung (36) zum Beurteilen einer Funktionsweise eines Einspritzventils (10) bei Anlegen einer Ansteuerspannung (U) an mindestens einen Aktor des Einspritzventils (10) mit:
- einer Ausgabeeinrichtung (36b), welche dazu ausgelegt ist, mithilfe eines an eine Steuerung (32) des Einspritzventils (10) ausgegebenen Steuersignals (42) mit der Ansteuerspannung (U) das Einspritzventil (10) so zu steuern, dass die Ansteuerspannung (U) für eine nicht-drehmomentbildende Einspritzung in einen Motor (12) an den mindestens einen Aktor angelegt wird;
- eine Empfangseinrichtung, welche dazu ausgelegt ist, eine von einem fahrzeugeigenen Sensor bereitgestellte Information über einen ermittelten Kraftstoffgehalt (R(U)) in einem an den Motor (12) angeordneten Abgastrakt (22) zu empfangen; und
- eine Vergleichseinrichtung (36c), welche dazu ausgelegt ist, den ermittelten Kraftstoffgehalt (R(U)) mit einem vorgegebenen Vergleichswert (R0) zu vergleichen und die Funktionsweise des Einspritzventils (10) basierend auf dem Vergleichsergebnis zu beurteilen wobei diese feststellt, dass das Anlegen der Ansteuerspannung (U) an den mindestens einen Aktor kein Öffnen des Einspritzventils (10) bewirkt, sofern der ermittelte Kraftstoffgehalt (R(U)) kleiner als der Vergleichswert (R0) ist, und dass diese feststellt, dass das Anlegen der Ansteuerspannung (U) an den mindestens einen Aktor ein Öffnen des Einspritzventils (10) bewirkt, sofern der ermittelte Kraftstoffgehalt (R(U)) größer als der Vergleichswert (R0) ist.

## Claims

1. Method for assessing functionality of an injection valve (10) upon the application of an activation voltage (U) to at least one actuator of the injection valve (10), having the steps:
(a) applying the activation voltage (U) to the at least one actuator of the injection valve (10) for a non-torque-generating injection into an engine (14);
(b) determining a fuel content (R(U)) in an exhaust tract (22) arranged on the engine (14);
(c) comparing the determined fuel content (R(U)) with a predefined comparative value (R0); and
(d) assessing the functionality of the injection valve (10) on the basis of the result of the comparison,
(e) wherein it is identified that the application of the activation voltage (U) to the at least one actuator does not result in an opening of the injection valve (10) if the determined fuel content (R(U)) is lower than the comparative value (R0),
(f) and wherein it is identified that the application of the activation voltage (U) to the at least one actuator does result in an opening of the injection valve (10) if the determined fuel content (R(U)) is higher than the comparative value (R0).

2. Method according to Claim 1, wherein the fuel content (R(U)) in the exhaust tract (22) is determined by means of a lambda probe (24).

3. Method according to one of the preceding claims, wherein step (a) is carried out at a piston position at which no torque is imparted in the event of a combustion of fuel which may possibly have been injected into the engine (12).

4. Method according to Claim 1, wherein step (a) is carried out at a piston position at which the fuel which may possibly have been injected into the engine (12) is no longer ignited.

5. Method according to one of the preceding claims, wherein a rail pressure (p) is measured, and the functionality of the injection valve (10) is evaluated as a function of the rail pressure (p).

6. Method according to one of the preceding claims, wherein a starting value (U0) for the activation voltage (U) is predefined upon commencement of the method.

7. Method according to Claim 5, wherein, if the determined fuel content (R(U)) is lower than the comparative value (R0), the activation voltage (U) is increased by a first predefined voltage difference (ΔU), and steps (a) to (c) are repeated at least once more in order to determine an activation voltage (U), the application of which to the at least one actuator results in an opening of the injection valve (10), as a newly determined activation voltage (Un(p)).

8. Method according to Claim 6 or 7, wherein, if the determined fuel content (R(U)) is higher than the comparative value (R0), the activation voltage (U) is reduced by a second predefined voltage difference, steps (a) to (e) are repeated at least once more, and subsequently the lowest activation voltage (U), upon the application of which to the at least one actuator an opening of the injection valve (10) is determined, is determined as a newly determined activation voltage (Un(p)).

9. Method according to Claim 6 or 7, wherein a characteristic curve for an optimum activation voltage as a function of the rail pressure is determined on the basis of the newly determined activation voltage (Un(p)).

10. Evaluation device (36) for assessing functionality of an injection valve (10) upon the application of an activation voltage (U) to at least one actuator of the injection valve (10), having:
- an output device (36b) which is designed such that, with the aid of a control signal (42) output to a controller (32) of the injection valve (10) with the activation voltage (U), said output device controls the injection valve (10) such that the activation voltage (U) for a non-torque-generating injection into an engine (12) is applied to the at least one actuator;
- a receiver device which is designed to receive information, provided by a sensor on the vehicle, regarding a determined fuel content (R(U)) in an exhaust tract (22) arranged on the engine (12); and
- a comparison device (36c) which is designed to compare the determined fuel content (R(U)) with a predefined comparative value (R0) and to assess the functionality of the injection valve (10) on the basis of the result of the comparison, wherein said comparison device identifies that the application of the activation voltage (U) to the at least one actuator does not result in an opening of the injection valve (10) if the determined fuel content (R(U)) is lower than the comparative value (R0), and wherein said comparison device identifies that the application of the activation voltage (U) to the at least one actuator does result in an opening of the injection valve (10) if the determined fuel content (R(U)) is higher than the comparative value (R0).

## Revendications

1. Procédé d'évaluation d'un mode de fonctionnement d'une soupape d'injection (10) lors de l'application d'une tension de commande (U) au niveau d'au moins un actionneur de la soupape d'injection (10), comprenant les étapes consistant à :
(a) appliquer la tension de commande (U) à l'au moins un actionneur de la soupape d'injection (10) pour une injection non génératrice de couple dans un moteur (14) ;
(b) détecter une teneur en carburant (R(U)) dans une ligne d'échappement (22) disposée au niveau du moteur (14) ;
(c) comparer la teneur en carburant détectée (R(U)) avec une valeur comparative prédéfinie (R0) ; et
(d) évaluer le mode de fonctionnement de la soupape d'injection (10) sur la base du résultat de la comparaison,
(e) où l'on établit que l'application de la tension de commande (U) à l'au moins un actionneur ne provoque aucune ouverture de la soupape d'injection (10) dans la mesure où la teneur en carburant détectée (R(U)) est inférieure à la valeur comparative (R0),
(f) et où l'on établit que l'application de la tension de commande (U) à l'au moins un actionneur provoque une ouverture de la soupape d'injection (10) dans la mesure où la teneur en carburant détectée (R(U)) est supérieure à la valeur comparative (R0) .

2. Procédé selon la revendication 1, dans lequel la teneur en carburant (R(U)) dans la ligne d'échappement (22) est détectée au moyen d'une sonde lambda (24).

3. Procédé selon l'une quelconque des revendications précédentes, dans lequel l'étape (a) est réalisée à une position du piston à laquelle, lors d'une combustion d'un carburant éventuellement injecté dans le moteur (12), aucun couple n'est produit.

4. Procédé selon la revendication 1, dans lequel l'étape (a) est réalisée à une position du piston à laquelle le carburant éventuellement injecté dans le moteur (12) n'est plus enflammé.

5. Procédé selon l'une quelconque des revendications précédentes, dans lequel une pression de rail (p) est mesurée et le mode de fonctionnement de la soupape d'injection (10) est analysé en fonction de la pression de rail (p).

6. Procédé selon l'une quelconque des revendications précédentes, dans lequel au début du procédé, une valeur de départ (U0) pour la tension de commande (U) est prédéfinie.

7. Procédé selon la revendication 5, dans lequel, dans la mesure où la teneur en carburant détectée (R(U)) est inférieure à la valeur comparative (R0), la tension de commande (U) est augmentée d'une première différence de tension prédéfinie (ΔU) et les étapes (a) à (c) sont répétées au moins encore une fois, afin de détecter une tension de commande (U) en tant que tension de commande nouvellement définie (Un(p)), dont l'application à l'au moins un actionneur provoque une ouverture de la soupape d'injection (10).

8. Procédé selon la revendication 6 ou 7, dans lequel, dans la mesure où la teneur en carburant détectée (R(U)) est supérieure à la valeur comparative (R0), la tension de commande (U) est réduite d'une deuxième différence de tension prédéfinie, les étapes (a) à (e) sont répétées au moins encore une fois, et ensuite la plus petite tension de commande (U) est détectée en tant que tension de commande nouvellement définie (Un(p)), lors de l'application de laquelle à l'au moins un actionneur, une ouverture de la soupape d'injection (10) est déterminée.

9. Procédé selon la revendication 6 ou 7, dans lequel, à l'aide de la tension de commande nouvellement définie (Un(p)), une caractéristique pour une tension de commande optimale est déterminée en fonction de la pression de rail.

10. Dispositif d'analyse (36) pour évaluer un mode de fonctionnement d'une soupape d'injection (10) lors de l'application d'une tension de commande (U) à au moins un actionneur de la soupape d'injection (10), comprenant :
- un dispositif émetteur (36b) qui est conçu pour commander, à l'aide d'un signal de commande (42) émis au niveau d'une commande (32) de la soupape d'injection (10), la soupape d'injection (10) avec la tension de commande (U) de telle sorte que la tension de commande (U) soit appliquée au niveau de l'au moins un actionneur pour une injection ne générant pas de couple dans un moteur (12);
- un dispositif récepteur, qui est conçu de manière à recevoir une information fournie par un capteur propre au véhicule, concernant une teneur en carburant détectée (R(U)), dans une ligne d'échappement (22) disposée au niveau du moteur (12), et
- un dispositif comparateur (36c) qui est conçu pour comparer la teneur en carburant détectée (R(U)) avec une valeur comparative prédéfinie (R0), et pour évaluer le mode de fonctionnement de la soupape d'injection (10) sur la base du résultat de la comparaison, celui-ci établissant que l'application de la tension de commande (U) à l'au moins un actionneur ne provoque aucune ouverture de la soupape d'injection (10), dans la mesure où la teneur en carburant détectée (R(U)) est inférieure à la valeur comparative (R0), et en ce que celui-ci établit que l'application de la tension de commande (U) à l'au moins un actionneur provoque une ouverture de la soupape d'injection (10), dans la mesure où la teneur en carburant détectée (R(U)) est supérieure à la valeur comparative (R0).
